# EUROPÄISCHE PATENTSCHRIFT

(11) **EP 2 105 284 B1**
(45) Veröffentlichungstag und Bekanntmachung des Hinweises auf die Patenterteilung: **23.11.2011**
(21) Anmeldenummer: 09002971.1
(22) Anmeldetag: 03.03.2009
(51) Int. Cl.: B29C 35/02

(54) **Verfahren zur Herstellung von Faserverbundbauteilen**
Method for manufacturing composite fibrous components
Procédé de fabrication de composants composites en fibres

(30) Priorität: 17.03.2008 DE 102008014657
(43) Veröffentlichungstag der Anmeldung: 30.09.2009
(73) Patentinhaber: EADS Deutschland GmbH, 85521 Ottobrunn (DE)
(72) Erfinder: Berchtold, Gerd, Dr., 82362 Weilheim (DE); Utecht, Stefan, 86916 Kaufering (DE)

(56) Entgegenhaltungen:
- EP-A- 0 533 418
- EP-A- 1 181 149
- EP-A- 1 484 165
- WO-A-00/27632
- WO-A-2007/054315
- US-A- 4 622 091

## Beschreibung

Die Erfindung betrifft ein Verfahren zur Herstellung von Faserverbundbauteilen.

Auf dem Gebiet der Herstellung von faserverstärkten Kunststoffbauteilen ist der Einsatz von mit Harz vorimprägnierten Faserhalbzeugen, sogenannten Prepregs seit langem bekannt. Die einzelnen Prepregs werden zur Bildung des herzustellenden Bauteils aufeinander abgelegt. Anschießend erfolgt eine Infiltrationsbehandlung und Aushärtung des Bauteils unter Anwendung von Druck und/oder Temperatur.

Bekannt ist auch das sogenannte Hot-Forming-Verfahren, bei dem die eben abgelegten, mit Harz imprägnierten Bauteile in einem weiteren Prozessschritt unter Einsatz von Wärme zu komplexen Formen umgeformt werden.

Ein weiteres bekanntes Verfahren ist das sogenannte RFI-Verfahren (Resin Film Infusion). Dabei erfolgt der Aufbau des herzustellenden Faserverbundbauteils durch Ablegen fester Harzfilme ohne Faseranteil auf trockenem Faserhalbzeug. Die Infiltration erfolgt durch anschließende Wärmezufuhr, wobei das Harz des Harzfilms aufschmilzt und das darunterliegende Faserhalbzeug infiltriert.

Nachteil beim Einsatz von Prepregs wie auch bei dem RFI-Verfahren ist die Tatsache, dass die Drapierbarkeit der Materialien, welche insbesondere bei der Erzeugung gekrümmter Bauteilformen von großer Wichtigkeit ist, nur eingeschränkt möglich ist. Bei einem Prepreg-Verfahren wird das Drapieren aufgrund der hohen Haftung der einzelnen Faserlagen erschwert, beim RFI-Verfahren besteht zwischen den einzelnen Schichten vor der Infiltration überhaupt keine Bindung, so dass das Positionieren und Fixieren der einzelnen Schichten zueinander erschwert ist. Außerdem ist beim RFI-Verfahren die Höhe des Schichtaufbaus verglichen mit der Dicke des ausgehärteten Bauteils relativ groß, was beim Aushärten zu langen Setzwegen innerhalb des Materials führt.

Aus der WO 00/27632 A1 ist ein Verfahren zur Herstellung von Faserverbundbau-teilen gemäβ dem Oberbegriff des Anspruchs 1 bekannt, wobei abwechselnd mit Harz vorimprägnierte faserhaltige Schichten und trockene faserhaltige Schichten aufeinander abgelegt werden, wobei die vorimprägnierten faserhaltigen Schichten einen Harzüberschuss aufweisen.

Die US 4,622,091 beschreibt ein weiteres Verfahren zur Herstellung von Faserver-bundbauteilen, wobei auf eine trockene faserhaltige Schicht eine feste Harzschicht gelegt wird. Der Vakuumaufbau umfasst Entlüftungsschichten, die über die Ränder des Vakuumaufbaus hinausragen.

Die EP 0 533 418 A1 beschreibt ein Verfahren zur Infiltration von faserhaltigen Schichten auf einem Formwerkzeug, wobei die Ränder des Formwerkzeugs auf einer höheren Temperatur gehalten werden als die zentralen Bereiche des Formwerkzeugs.

Es ist Aufgabe der Erfindung, ein Verfahren zur Herstellung von Faserverbundbauteilen zu schaffen, mit dem die im Bauteil befindliche Luft und sonstige Bestandteile möglichst vollständig abgeführt werden können.

Diese Aufgabe wird mit Verfahren nach Anspruch 1 gelöst. Vorteilhafte Ausführungen der Erfindung sind Gegenstand von Unteransprüchen.

Erfindungsgemäß werden zur Integration des Faserverbundbauteils abwechselnd mit Harz vorimprägnierte faserhaltige Schichten, d.h. Prepregs, und trockene faserhaltige Schichten aufeinander abgelegt, wobei die vorimprägnierten faserhaltigen Schichten einen Harzüberschuss aufweisen. Der Harzanteil ist ausreichend, um mit dem Harz der vorimprägnierten Schichten die benachbarten trockenen Schichten zu infiltrieren.

Damit wird als ein wesentlicher Vorteil eine sehr gute Drapierbarkeit des Materials erzielt, da die vorimprägnierten Schichten keine Haftung untereinander haben und die trockenen Schichten relativ zu den vorimprägnierten Schichten gut beweglich sind.

Die vorimprägnierten Schichten wirken als Binder und erleichtern das Positionieren und Heften der trockenen Schichten. Der Einsatz von zusätzlichen Bindermaterialien, z.B. einem Bindervlies, kann entfallen.

Mit dem erfindungsgemäßen Verfahren ist es darüber hinaus sehr einfach möglich, für die Herstellung komplexer Strukturen (z.B. Holmstrukturen) das Fasermaterial zunächst eben abzulegen und es in einem weiteren Verfahrensschritt unter Anwendung von Wärme umzuformen. Eine solche Vorgehensweise ist mit dem erfindungsgemäßen Verfahren mit geringerem Aufwand möglich als mit dem bekannten Hot-Forming-Verfahren.

Mit dem erfindungsgemäßen Verfahren ist ein hinsichtlich Gewicht und Festigkeit optimiertes Bauteil möglich.

Ein weiterer wesentlicher Vorteil des erfindungsgemäßen Verfahrens liegt darin, dass über die trockenen Schichten die Abführung der Restluft und sonstiger flüchtiger Bestandteile aus dem Schichtaufbau sehr gut möglich ist.

Das in dem Aufbau vorhandene Harz der Prepregs reicht zur vollständigen Infiltration des Bauteils in der Regel aus, so dass eine zusätzliche Infiltration mit der damit verbundenen Bereitstellung von zusätzlichem Harz, Aufheizung und zusätzlichen Infiltrationszeiten entfallen kann. Jedoch ist eine solche zusätzliche Infiltration nicht ausgeschlossen.

Aushärtung und/oder Infiltration des Bauteils kann z.B. in einem Autoklaven, einem Umluftofen mit oder ohne Druckbeaufschlagung, einer Presse oder in einem beheizten Werkzeug erfolgen.

Die Aushärtung und/oder die Infiltration kann in einer vorteilhaften Ausführung unter Einsatz einer semipermeablen Membran, welche das Faserverbundbauteil gegen die Umgebung abschließt, erfolgen. Die Membran ist harzundurchlässig aber luftdurchlässig, um insbesondere die Restentlüftung des Bauteils zu ermöglichen. Der Einsatz einer solchen Membran ist z.B. in der EP 1 181 149 B1 beschrieben.

Die Druckbeaufschlagung während der Infiltrationsbehandlung oder Aushärtung des Faserverbundbauteils kann mechanisch, hydraulisch oder pneumatisch erzeugt werden.

Das erfindungsgemäße Verfahren kann als fortlaufender Prozess (z.B. Intervallheißpressen) ausgebildet sein, der sich insbesondere für kleinere Bauteile eignet (z.B. Profile) oder aber als statischer Prozess (z.B. Autoklav, Ofen).

Die faserhaltigen Schichten können aus einer oder mehreren Lagen eines Gewebes oder eines Geleges oder einer oder mehreren unidirektionalen Faserlagen bestehen. Als Fasermaterialien eignen sich insbesondere Glasfasern, Kohlenstofffasern, Aramidfasern oder eine Kombination aus mehreren dieser Fasern. Diese Angaben gelten sowohl für die trocken als auch für die vorimprägnierten Schichten. Die verwendeten Harze können auf duroplastischer oder thermoplastischer Basis beruhen.

Gemäß der Erfindung wird der Verlauf der Fließfronten des Harzes während der Infiltration oder Aushärtung gezielt gesteuert. Eine Möglichkeit hierzu ist die gezielte Ansteuerung von in dem Werkzeug integrierten Heizkreisen.

Die Erfindung wird anhand von Ausführungsbeispielen unter Bezugnahme auf Fig. erläutert. Es zeigen:
- Fig. 1: der Schichtaufbau des Faserverbundbauteils nach dem erfindungsgemäßen Verfahren;
- Fig. 2: der Schichtaufbau des Faserverbundbauteils nach dem erfindungsgemäßen Verfahren, mit der Darstellung der Beweglichkeit der einzelnen Schichten gegeneinander;
- Fig. 3: der Schichtaufbau des Faserverbundbauteils nach dem erfindungsgemäßen Verfahren, mit der Darstellung des Überstands der trockenen Schichten am Rand des Schichtaufbaus;
- Fig. 4: der Schichtaufbau des Faserverbundbauteils nach dem erfindungsgemäßen Verfahren, mit der Darstellung der Fließfrontensteuerung des Harzes bei der Infiltration oder Aushärtung.

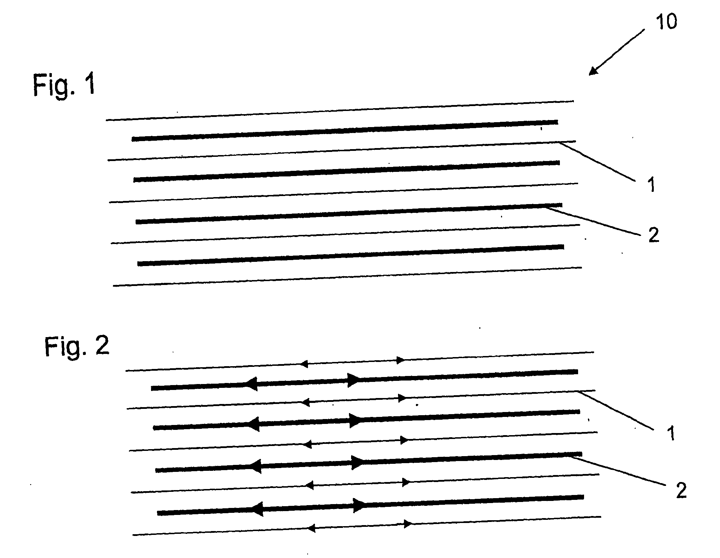

Fig. 1 zeigt den hybriden Schichtaufbau eines Faserverbundbauteils 10, wie er entsprechend dem erfindungsgemäßen Verfahren erzeugt wird. Er umfasst abwechselnd trockene 1 und vorimprägnierte 2 Faserlagen, die nacheinander aufeinander abgelegt werden. Dabei weisen die vorimprägnierten Faserlagen 2 einen Harzüberschuss auf.

Da die vorimprägnierten Schichten 2 durch jeweils eine trockene 1 Schicht getrennt sind und somit untereinander keine Haftung aufweisen, während gleichzeitig die trockenen Schichten 1 gegenüber den vorimprägnierten Schichten 2 ausreichend beweglich sind, lässt sich der Faseraufbau sehr gut drapieren. Eine ausreichende Fixierung der Schichten untereinander ist dabei aufgrund der vorhandenen vorimprägnierten Schichten 2 gegeben.

Aufgrund der guten Drapierbarkeit ist eine Umformung des Bauteils durch Änderung der Bauteilgeometrie somit sehr einfach möglich. In Fig. 2 ist die erwähnte gute Beweglichkeit der Schichten 1,2 schematisch durch Pfeile dargestellt.

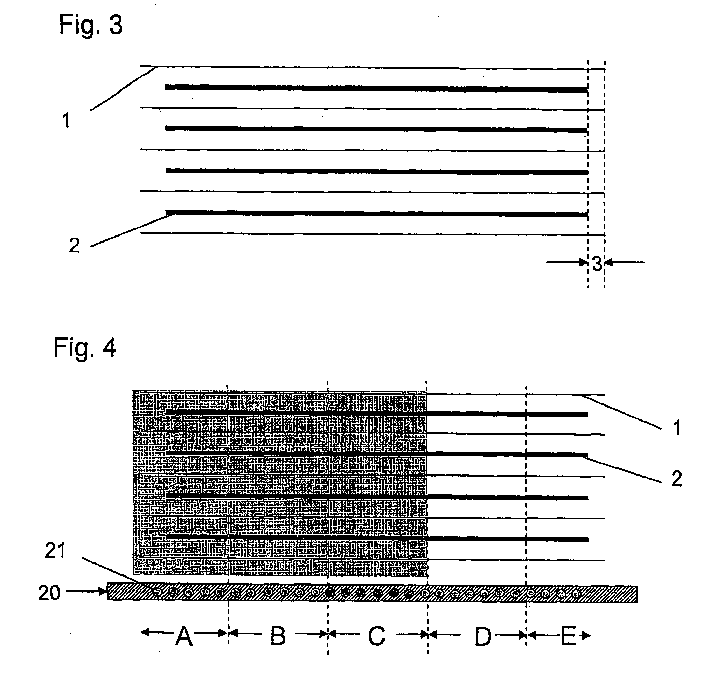

Ein weiterer Vorteil des Hybridaufbaus aus trockenen 1 und vorimprägnierten 2 Schichten besteht darin, dass über die trockenen Schichten 1 die Abführung der Restluft und der sonstigen flüchtigen Bestandteile aus dem Bauteil durch Absaugen sehr effektiv möglich ist. Wie Fig. 3 zeigt, lässt man dazu vorteilhaft an den Rändern des Bauteils 10 die trockenen Schichten 1 über die vorimprägnierten Schichten 2 hinausragen (Überstand 3). Dies dient vor allem dazu, an den Enden der trockenen Schichten 1 eine Belegung mit Harz zu vermeiden, so dass die Absaugwege nicht blockiert werden kann.

Fig. 4 zeigt eine Ausführung, bei der die Fließfront des Harzes bei der Infiltration/ Aushärtung gezielt gesteuert werden kann. Dazu sind in das Werkzeug 20 räumlich verteilte Heizelemente 21 eingebracht. Diese Heizelemente erstrecken sich in dieser Ausführung in linearer Anordnung parallel zu den faserhaltigen Schichten des Bauteils. Die einzelnen Heizelemente 21 sind hier fünf Heizzonen A bis E zugeordnet. Die den einzelnen Heizzonen zugeordneten Heizelemente können unabhängig von den Heizelementen der anderen Heizzonen angesteuert werden.

In der Ausführung nach Fig. 4 soll die Fließfront des Harzes vom linken zum rechten Bauteilrand wandern. Fig. 4 zeigt eine Momentaufnahme, bei der die Fließfront in etwa auf halben Weg zwischen den beiden Bauteilrändern angekommen ist. In der mittleren Heizzone C ist derzeit die Temperatur am höchsten, während in den Heizzonen A und B, bei denen die Infiltration schon erfolgt ist, die Temperatur bereits wieder gefallen ist (die Temperaturen werden durch unterschiedliche Graustufen symbolisiert). Die Heizzone E am rechten Rand ist von der Fließfront noch nicht erfasst, ihre Temperatur ist dort noch auf niedrigerem Niveau verglichen mit Zone C. Die Heizzone D wird als nächstes von der Fließfront erfasst werden, in dem die Heizelemente dieser Zone aktiviert werden.

Durch diese gezielte räumliche Steuerung der Infiltration sollen insbesondere die im Bauteil befindliche Luft und sonstige flüchtige Bestandteile möglichst vollständig abgeführt werden.

Anders als bei der in Fig. 4 gezeigten Ausführung mit einer Fließfront, die sich von einer Seite des Bauteils zur anderen Seite bewegt, kann die Fließfrontsteuerung auch derart erfolgen, dass z.B. in der Mitte des Bauteils begonnen wird und mehrere Fließfronten in entgegengesetzten Richtungen zu den Bauteilrändern wandern.

## Patentansprüche

1. Verfahren zur Herstellung von Faserverbundbauteilen, wobei zur Integration des Faserverbundbauteils (10) auf einem Werkzeug (20) abwechselnd mit Harz vorimprägnierte faserhaltige Schichten (2) und trockene faserhaltige Schichten (1) aufeinander abgelegt werden, wobei die vorimprägnierten faserhaltigen Schichten (2) einen Harzüberschuss aufweisen und nach der Ablage der Schichten eine Infiltrationsbehandlung oder Aushärtung des Faserverbundbauteils (10) unter Wärmezufuhr erfolgt, **dadurch gekennzeichnet, dass** die Infiltration durch zeitlich und räumlich variablen Wärmeeintrag erfolgt, um die Steuerung der Harzfließfronten zu realisieren, wobei der zeitlich und räumlich variable Wärmeeintrag durch definierte zeitliche Aktivierung vom in dem Werkzeug (20) räumlich verteilten Heizmitteln (21) erfolgt.

2. Verfahren nach Anspruch 1, **dadurch gekennzeichnet, dass** die faserhaltigen Schichten (1,2) aus einer oder mehreren Lagen eines Gewebes oder eines Geleges oder aus einem oder mehreren unidirektionalen Faserlagen bestehen.

3. Verfahren nach Anspruch 1 oder 2, **dadurch gekennzeichnet, dass** die faserhaltigen Schichten (1,2) Glasfasern, Kohlenstofffasem oder Aramidfasern oder eine Kombination daraus enthalten.

4. Verfahren nach einem der vorangehenden Ansprüche, **dadurch gekennzeichnet, dass** eine Restentlüftung des Faserverbundbauteils (10) unter Einsatz einer semipermeablen Membran erfolgt, die luftdurchlässig jedoch harzundurchlässig ist.

5. Verfahren nach einem der vorangehenden Ansprüche, **dadurch gekennzeichnet, dass** die Ablage der Schichten derart erfolgt, dass an deren Rändern die trockenen Schichten gegenüber den vorimprägnierten Schichten einen Überstand (3) aufweisen.

6. Verfahren nach einem der vorangehenden Ansprüche, **dadurch gekennzeichnet, dass** während der Infiltrationsbehandlung oder Aushärtung des Faserverbundbauteils eine mechanische, hydraulisch oder pneumatisch erzeugte Druckbeaufschlagung erfolgt.

7. Verfahren nach einem der vorangehenden Ansprüche, **dadurch gekennzeichnet, dass** die faserhaltigen Schichten zunächst eben abgelegt werden und in einem weiteren Schritt unter Wärmezufuhr geformt werden.

## Claims

1. Method for manufacturing composite fibrous components, resin-preimpregnated fibre-containing layers (2) and dry fibre-containing layers (1) being alternately deposited one on top of the other on a mould (20) for the integration of the composite fibrous component (10), the preimpregnated fibre-containing layers (2) having a surplus of resin and an infiltration treatment or curing of the composite fibrous component (10) being performed by supplying heat after the layers have been deposited, **characterized in that** the infiltration is performed by temporally and spatially variable introduction of heat in order to effect the control of the resin flow fronts, the temporally and spatially variable introduction of heat being performed by defined temporal activation of heating means (21) spatially distributed in the mould (20).

2. Method according to Claim 1, **characterized in that** the fibre-containing layers (1, 2) consist of one or more layers of a woven or laid fabric or of one or more unidirectional fibre layers.

3. Method according to Claim 1 or 2, **characterized in that** the fibre-containing layers (1, 2) contain glass fibres, carbon fibres or aramid fibres or a combination thereof.

4. Method according to one of the preceding claims, **characterized in that** a removal of residual air from the composite fibrous component (10) is performed using a semipermeable membrane, which is air-permeable but resin-impermeable.

5. Method according to one of the preceding claims, **characterized in that** the depositing of the layers is performed in such a way that the dry layers have an overhang (3) at their edges with respect to the preimpregnated layers.

6. Method according to one of the preceding claims, **characterized in that**, during the infiltration treatment or curing of the composite fibrous component, a mechanically, hydraulically or pneumatically produced pressurization takes place.

7. Method according to one of the preceding claims, **characterized in that** the fibre-containing layers are first deposited flat and are shaped in a further step by supplying heat.

## Revendications

1. Procédé de fabrication de composants en composite de fibres, dans lequel pour intégrer le composant (10) en composite de fibres, des couches (2) pré-imprégnées de résine et contenant des fibres et des couches (1) sèches et contenant des fibres sont déposées les unes au-dessus des autres sur un outil (20), les couches (2) contenant des fibres et pré-imprégnées présentant un excès de résine, un traitement d'infiltration ou de durcissement du composant (10) en composite de fibres étant réalisé par apport de chaleur après le dépôt des couches,
**caractérisé en ce que**
l'infiltration s'effectue par apport de chaleur variant dans le temps et dans l'espace pour réaliser le contrôle des fronts d'écoulement de résine, l'apport de chaleur variant dans le temps et dans l'espace étant réalisé par activation définie dans le temps de moyens de chauffage (21) répartis spatialement dans l'outil (20).

2. Procédé selon la revendication 1, **caractérisé en ce que** les couches (1, 2) contenant des fibres sont constituées d'une ou plusieurs couches d'un tissu ou d'un mat ou encore d'une ou plusieurs couches unidirectionnelles de fibres.

3. Procédé selon les revendications 1 ou 2, **caractérisé en ce que** les couches (1, 2) contenant des fibres contiennent des fibres de verre, des fibres de carbone, des fibres d'aramide ou une de leurs combinaisons.

4. Procédé selon l'une des revendications précédentes, **caractérisé en ce que** l'évacuation de l'air résiduel du composant (10) en composite de fibres s'effectue par recours à une membrane semi-perméable qui est perméable à l'air mais imperméable à la résine.

5. Procédé selon l'une des revendications précédentes, **caractérisé en ce que** le dépôt des couches s'effectue de telle sorte que les bords des couches sèches débordent (3) des couches pré-imprégnées.

6. Procédé selon l'une des revendications précédentes, **caractérisé en ce qu'**une pression est appliquée par des moyens mécaniques, hydrauliques ou pneumatiques pendant le traitement d'infiltration ou le durcissement du composant en composite de fibres.

7. Procédé selon l'une des revendications précédentes, **caractérisé en ce que** les couches contenant des fibres sont d'abord déposées en plan et dans une autre étape sont ensuite moulées avec apport de chaleur.
